Europäisches Patentamt

European Patent Office

Office européen des brevets

(11) Publication number: **0 232 925 B1**

(12) # EUROPEAN PATENT SPECIFICATION

(45) Date of publication of patent specification: **10.06.92**  (51) Int. Cl.5: **B01D 3/20**, B01D 53/18

(21) Application number: **87200019.5**

(22) Date of filing: **07.01.87**

(54) **Apparatus for contacting gas and liquid and process for the removal of H2S.**

(30) Priority: **21.01.86 GB 8601359**

(43) Date of publication of application:
**19.08.87 Bulletin  87/34**

(45) Publication of the grant of the patent:
**10.06.92 Bulletin  92/24**

(84) Designated Contracting States:
**BE DE FR GB NL**

(56) References cited:
**DE-A- 3 236 304**

**SOVIET INVENTIONS ILLUSTRATED, week 8724, 24th June 1987, abstract no. 87-168519/24 J01, Derwent Publications Ltd, London, GB; & SU-A-1 264 957 (UFA PETROL PROCESS) 23-10-1986**

**SOVIET INVENTIONS ILLUSTRATED, week E46, 5th January 1983, abstract no. 99365E/46 J01, Derwent Publications Ltd, London, GB; & SU-A-899 050 (COAL CHEM. RES. INST.) 23-01-1982**

(73) Proprietor: **SHELL INTERNATIONALE RE-SEARCH MAATSCHAPPIJ B.V.**
**Carel van Bylandtlaan 30**
**NL-2596 HR Den Haag(NL)**

(72) Inventor: **Asmus, Gerardus**
**Gerard Doulaan 21**
**NL-1181 WR Amstelveen(NL)**
Inventor: **Suenson, Martin Maersk**
**Carel van Bylandtlaan 30**
**NL-2596 HR The Hague(NL)**
Inventor: **Danckaarts, Anton Matthijs**
**Badhuisweg 3**
**NL-1031 CM Amsterdam(NL)**

Rank Xerox (UK) Business Services

## Description

The present invention relates to an apparatus for contacting gas and liquid comprising a vessel having fluid inlet means and fluid outlet means.

Soviet Inventions Illustrated, week E46, 5th January, 1983, abstract no. 99 365E/46 J01, Derwent Publications Ltd, London, GB; & SU-A 899 050 (Coal Chem. Res. Inst.), 23-01-82 discloses an apparatus for contacting gas and liquid comprising a vessel having fluid inlet means, fluid outlet means and at least one horizontal tray arranged in the vessel. Each horizontal tray is provided with a plurality of apertures and a downcomer.

During normal operation liquid is supplied on the horizontal tray, gas flowing upwards through the apertures of the horizontal tray is bubbling through the liquid layer on the tray, and liquid flows through the downcomer to below the tray. Gas separated from the liquid layer flows upwards out of the vessel. To remove entrained liquid from the upwards flowing gas a deflector is arranged above the horizontal tray.

It is an object of the present invention to improve the contacting between gas and liquid and to improve the separation of gas and liquid.

To this end the apparatus for contacting gas and liquid according to the present invention is characterized in that each horizontal tray is provided with a contacting means, which contacting means comprises an open-ended vertical tube in which contacting material is arranged and in which swirl imparting means are arranged above the contacting material, first conduit means allowing fluid communication between the space above the horizontal tray and the interior of the vertical tube below the contacting material, and second conduit means allowing fluid communication between the interior of the vertical tube above the swirl imparting means and the space below the horizontal tray.

During normal operation gas is introduced into a vessel below the horizontal tray and liquid is introduced into the vessel above the horizontal tray and is passed from above the horizontal tray into the interior the open-ended vertical tube below the contacting material, the mixture of gas and liquid is passed upwardly through the contacting material to the swirl imparting means arranged so as to separate gas and liquid, thereupon liquid is passed from the upper part of the vertical tube to below the horizontal tray, and gas is removed from above the horizontal tray.

The invention further relates to a process for the removal of $H_2S$ from a sour $H_2S$-containing gaseous mixture, which process comprises introducing the gaseous mixture into a vessel below a horizontal tray provided with contacting means which horizontal tray is arranged in the vessel, introducing liquid absorbent into the vessel above the horizontal tray, passing liquid absorbent from above the horizontal tray into the interior of an open-ended vertical tube pertaining to the contacting means below contacting material arranged in the vertical tube, passing absorbent and gaseous mixture upwardly through the contacting material, passing absorbent and gaseous mixture via swirl imparting means arranged in the vertical tube so as to separate purified gas and loaded absorbent, passing loaded absorbent from the upper part of the vertical tube to below the horizontal tray, removing purified gas from the vessel above the horizontal tray and removing loaded absorbent from the vessel below the horizontal tray.

In order to obtain overall counter-current contacting of liquid and gas the vessel comprises two or more axially spaced apart horizontal trays.

The invention will now be described by way of example in more detail with reference to the drawings, wherein

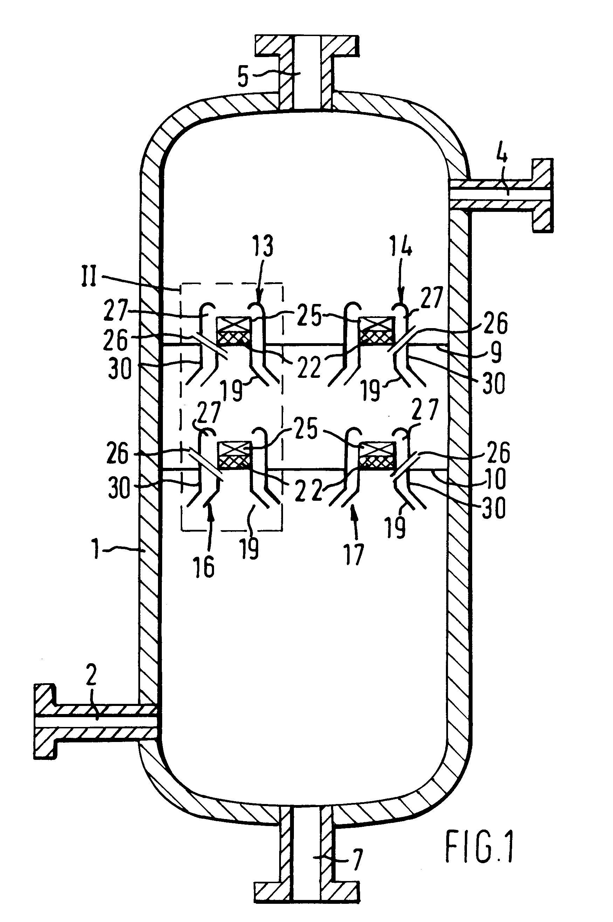

Figure 1 shows the apparatus for carrying out the method according to the invention; and

Figure 2 shows detail II of Figure 1 drawn to a scale larger than the scale of Figure 1.

The apparatus comprises a normally vertical vessel 1 having fluid inlet means in the form of gas inlet 2 arranged at the bottom part of the vessel 1 and liquid inlet 4 arranged at the top part of the vessel 1, and fluid outlet means in the form of gas outlet 5 arranged at the top part of the vessel 1 and liquid outlet 7 arranged at the bottom part of the vessel 1.

The apparatus further comprises an upper horizontal tray 9 and a lower horizontal tray 10 arranged in the vessel 1, supported by supports (not shown) which are connected to the wall of the vessel 1.

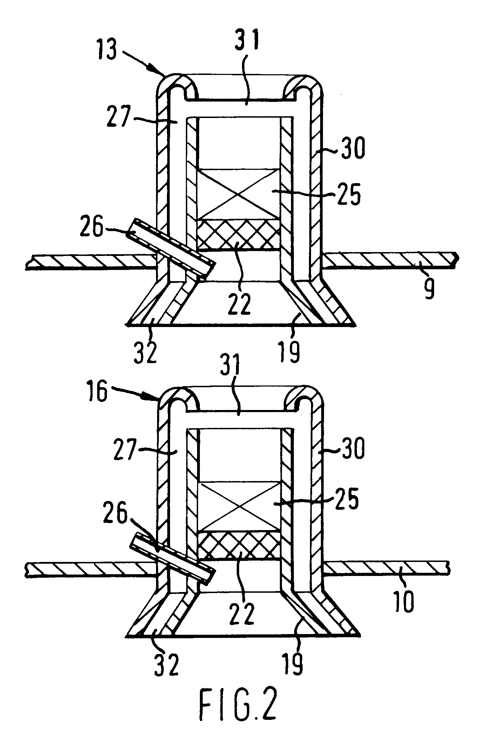

The upper horizontal tray 9 is provided with contacting means 13 and 14, and the lower horizontal tray 10 with contacting means 16 and 17. Each contacting means 13, 14, 16 and 17 comprises an open-ended vertical tube 19 in which contacting means 22 are arranged and in which swirl imparting means 25 are arranged above the contacting means 22. The contacting means 13, 14, 16 and 17 further comprise first conduit means in the form of tube 26 allowing fluid communication between the space above the horizontal tray 9 or 10 and the interior of the vertical tube 19 below the contacting material 22, and second conduit means in the form of annular space 27 between the outer side of the wall of the vertical tube 19 and the inner side of the wall of tube 30 arranged externally around the vertical tube 19. Slit 31 (see Figure 2) provides fluid communication between the upper end of the annular space 27 and the interior of the vertical tube 19 above the swirl imparting means 25, and at the lower end of the annular space 27 there is an outlet opening 32 below the horizontal tray.

During normal operation, gas is continuously introduced into the vessel 1 through gas inlet 2 arranged below the horizontal tray 10, and it flows upwardly through the vessel 1 via the vertical tubes 19 of the contacting means 16 and 17 pertaining to the lower horizontal tray 10 and via the vertical tubes 19 of the contacting means 13 and 14 pertaining to the upper horizontal tray 9. Gas is discharged from the vessel through the gas outlet 5 arranged above the upper horizontal tray 9. At the same time liquid is continuously introduced into the vessel 1 through the liquid inlet 4 arranged above the upper horizontal tray 9. On the upper horizontal tray 9 liquid is collected until the liquid level on the upper horizontal tray 9 reaches the inlet openings of the tubes 26 pertaining to the contacting means 13 and 14, then liquid flows through the tubes 26 into the vertical tubes 19 pertaining to the contacting means 13 and 14 below the contacting material 22 arranged in these vertical tubes 19. In each contacting means 13 and 14, the upwardly directed gas flow forces liquid to pass with gas through the contacting material 22 where gas and liquid are intensively contacted in co-current flow. Subsequently the mixture of gas and liquid passes the swirl imparting means 25, arranged above, or downstream to the contacting material 22, where gas and liquid are separated. Gas leaves the upper end of the vertical tube 19 and passes to the gas outlet 5 arranged above the upper horizontal tray 9, and liquid flows along the inner side of the wall of the vertical tube 19 above the swirl imparting means 25 through the slit 31 into the annular space 27 through which liquid flows downwardly.

Liquid leaving the annular spaces 27 through the opening 32 pertaining to the contacting means 13 and 14 is collected on the lower horizontal tray 10 until the liquid level on the lower horizontal tray 10 reaches the inlet openings of the tubes 26 pertaining to the contacting means 16 and 17, then liquid flows through the tubes 26 into the vertical tubes 19 pertaining to the contacting means 16 and 17 below the contacting material 22 arranged in these vertical tubes 19. In each contacting means 16 and 17, the upwardly directed gas flow forces liquid to pass with gas through the contacting material 22, where gas and liquid are intensively mixed in co-current flow. Subsequently the mixture of gas and liquid passes the swirl imparting means 25 arranged above, or downstream to the contacting material 22, where gas and liquid are separated. Gas leaves the upper ends of the vertical tubes 19 pertaining to the contacting means 16 and 17 and flows into the lower ends of the vertical tubes 19 pertaining to the contacting means 13 and 14, and liquid flows along the inner sides of the walls of the vertical tubes 19 above the swirl imparting means 25 through the slits 31 into the annular spaces 27 through which it flows downwardly.

Liquid leaving the annular spaces 27 pertaining to the contacting means 16 and 17 is discharged from the vessel 1 through the liquid outlet 7 arranged in the bottom part of the vessel 1 below the lower horizontal tray 10.

The apparatus according to the present invention allows counter-current flow of gas and liquid through the vessel, whereas gas and liquid flow co-currently through the contacting material which allows high gas velocities. As a result thereof a short contacting time can be obtained.

The apparatus can be used for removing acid components, such as hydrogen sulphide, carbon dioxide and carbonyl sulphide from a gas mixture by contacting the gas mixture with a lean absorbent, for example an aqueous solution of an amine. As a result of the short contacting time, the apparatus according to the present invention can suitably be used for selective removal of $H_2S$ from a gaseous mixture containing $H_2S$ and $CO_2$ with a liquid absorbent comprising a tertiary amine or a tertiary alkanolamine and, if required, a physical absorbent.

Sour gas containing $H_2S$ and $CO_2$ is introduced into the vessel 1 through inlet 2. A lean liquid and regeneratable absorbent comprising an aqueous solution of a tertiary alkanolamine is introduced into the vessel through inlet 5. Sour gas is passed upwardly through the vessel 1 via the vertical tubes 19 of the contacting means 16 and 17 and the vertical tubes 19 of the contacting means 13 and 14. Lean absorbent is collected on the upper horizontal tray 9 and passes through the tubes 26 into the vertical tubes 19 pertaining to the contacting means 13 and 14 below the contacting material 22 arranged in the vertical tubes 19. Solvent and gas pass co-currently through the contacting material 22 so as to remove $H_2S$ from the gas and to obtain purified gas and partly loaded solvent. Subsequently partly loaded solvent absorbent and purified gas are passed via swirl imparting means 25 arranged in the vertical tubes 19 above the contacting material 22 where partly loaded solvent is separated from purified gas. Purified gas is removed from the vessel 1 through gas outlet 5 arranged above the upper horizontal tray 9.

Partly loaded absorbent is passed to below the upper horizontal tray 9 and is collected on the lower horizontal tray 10. Partly loaded absorbent is passed through the tubes 26 into the vertical tubes 19 pertaining to the contacting means 16 and 17 below the contacting material 22 arranged in the vertical tubes. Partly loaded absorbent and sour gas are passed co-currently through the contacting material 22 so as to remove $H_2S$ from the sour gas and to obtain partly purified gas and loaded absorbent. Subsequently the mixture is passed via swirl imparting means 25 arranged above the contacting material 22 where loaded solvent is separated from partly purified gas. Partly purified gas is further purified in the contacting means 13 and 14 arranged in the upper horizontal tray 9, and loaded absorbent is passed to below the lower horizontal tray 10 and is removed from the vessel 1 through liquid outlet 7.

Loaded absorbent is passed to a regenerator (not shown) where the absorbed sour components are removed from the solvent to produce lean solvent which is passed to inlet 5.

The apparatus can further be used for distillation, for example distillation of crude oil, wherein a mixture of gaseous and liquid hydrocarbons is introduced into the vessel 1 through inlet 2. The gaseous hydrocarbons will flow upwardly through the vessel 1, a part of these hydrocarbons will condense on the lower horizontal tray 10 and on the upper horizontal tray 9 and the remaining part of the gaseous hydrocarbons is drawn off through the gas outlet 5.

Liquid hydrocarbons present on the lower horizontal tray 10 flow through tubes 26 into the vertical tubes 19 pertaining to the contacting means 16 and 17 below the contacting material 22 arranged therein. Gaseous hydrocarbons and liquid hydrocarbons are contacted in the contacting material 22 and subsequently separated in the swirl imparting means 25.

Gaseous hydrocarbons pass upwardly into the contacting means 13 and 14 pertaining to the upper horizontal tray 9. Liquid separated from gas flows through the annular spaces 27 downwardly to below the lower horizontal tray 10 and is discharged from the vessel 1 through liquid outlet 7.

In the contacting means 13 and 14 pertaining to the upper horizontal tray 9 gaseous hydrocarbons are further contacted with liquid hydrocarbons flowing through tubes 26 from above the upper horizontal tray 9. The separated gaseous hydrocarbons are withdrawn through the gas outlet 5, and the liquid hydrocarbons flow through annular spaces 27 and are collected on the lower horizontal tray 10.

If required additional liquid hydrocarbons can be supplied through liquid inlet 4, and liquid hydrocarbons may be drawn off from the horizontal trays through outlets (not shown).

In the simplest embodiment of the invention, the apparatus comprises one horizontal tray arranged in the vessel and provided with one contacting means. The horizontal tray may comprise a plurality of contacting means distributed over the tray. To improve the efficiency of the apparatus, the apparatus may further comprise two or more axially spaced apart horizontal trays, for example 5 to 30.

The inlet 2 can, if required, be arranged between the two horizontal trays. Moreover further fluid inlets can be arranged between two horizontal trays.

Suitable contacting material that can be arranged in a vertical tube of a contacting means will be known to those skilled in the art of packed column design. Examples are random packing such as "Pall"-rings or "Raschig"-rings and saddles of various types, or structured packing comprising regularly arranged arrays or layers of sheet or gauze material, knitted wire or plastic wool or other fibrous material.

Suitable swirl imparting means are, for example, swirl vanes.

## Claims

1. Apparatus for contacting gas and liquid comprising a vessel (1) having fluid inlet means (2, 4), fluid outlet means (5, 7) and at least one horizontal tray (9, 10) arranged in the vessel (1), characterized in that each horizontal tray (9, 10) is provided with a contacting means (13), which contacting means (13) comprises an open-ended vertical tube (19) in which contacting material (22) is arranged and in which swirl imparting means (25) are arranged above the contacting material (22), first conduit means (26) allowing fluid communication between the space above the horizontal tray (9, 10) and the interior of the vertical tube (19) below the contacting material (22), and second conduit means (27) allowing fluid communication between the interior of the vertical tube (19) above the swirl imparting means (25) and the space below the horizontal tray (9, 10).

2. Apparatus as claimed in claim 1, wherein each horizontal tray (9, 10) comprises a plurality of contacting means distributed over the horizontal tray (9, 10).

3. Apparatus as claimed in claim 1 or 2, wherein the vessel (1) comprises two or more axially spaced apart horizontal trays (9, 10).

4. Apparatus as claimed in any one of the claims 1-3, wherein the first conduit means comprises at least one open-ended tube (26).

5. Apparatus as claimed in any one of the claims 1-4, wherein the second conduit means (27) includes an annular space between the outer side of the wall of the open-ended vertical tube (19) and the inner side of the wall of a tube (30) arranged externally around the vertical tube (19), the upper end of the annular space communicating with the interior of the vertical tube (19) above the swirl imparting means (25) and the lower end having an outlet opening below the horizontal tray (9, 10).

6. Process for the removal of $H_2S$ from a sour $H_2S$-containinggaseous mixture comprising introducing the gaseous mixture (2) into a vessel (1) below a horizontal tray (9) provided with contacting means (13, 14) which horizontal tray (9) is arranged in the vessel (1), introducing liquid absorbent (4) into the vessel (1) above the horizontal tray (9), passing liquid absorbent from above the horizontal tray (9) into the interior of an open-ended vertical tube (19) pertaining to the contacting means (13, 14) below contacting material (22) arranged in the vertical tube (19), passing absorbent and gaseous mixture upwardly through the contacting material (22), passing absorbent and gaseous mixture via swirl imparting means (25) arranged in the vertical tube (19) so as to separate purified gas and loaded absorbent, passing loaded absorbent from the upper part of the vertical tube (19) to below the horizontal tray (9), removing purified gas (5) from the vessel (1) above the horizontal tray (9) and removing loaded absorbent (7) from the vessel (1) below the horizontal tray (9).

**Revendications**

1. Appareil de mise en contact de gaz et de liquide comprenant un récipient (1), comportant des moyens d'entrée de fluide (2,4), des moyens de sortie de fluide (5, 7) et au moins un plateau horizontal (9,10) disposé dans le récipient (1), caractérisé en ce que chaque plateau horizontal (9,10) comporte un moyen de contact (13), moyen de contact (13) qui comprend un tube vertical (19) a extrémités ouvertes dans lequel est disposé la matière de contact (22) et dans lequel un moyen de tourbillonnement (25) est disposé au dessus de la matière de contact (22) ; un premier conduit (26) permettant la communication fluide entre l'espace surmontant le plateau horizontal (9,10) et l'intérieur du tube vertical (19) au dessous de la matière de contact (22) ; et un second conduit (27) permettant la communication fluide entre l'intérieur du tube vertical (19) au dessus du dispositif de tourbillonnement (25) et l'espace au dessous du plateau horizontal (9,10).

2. Appareil selon la revendication 1, dans lequel chaque plateau horizontal (9,10) comprend une série de moyens de contact distribués sur le plateau horizontal (9,10).

3. Appareil selon la revendication 1 ou 2, dans lequel le récipient (1) comprend deux ou plusieurs plateaux horizontaux axialement espacés (9,10).

4. Appareil selon l'une quelconque des revendications 1 à 3, dans lequel le premier conduit comprend au moins un tube à extrémités ouvertes (26).

5. Appareil selon l'une quelconque des revendications 1 à 4, dans lequel le second conduit (27) comporte un espace annulaire entre la face extérieure de la paroi du tube vertical (19) à extrémités ouvertes et la face intérieure de la paroi d'un tube (30) a l'extérieur et sur le pourtour du tube vertical (19), l'extrémité supérieure de l'espace annulaire étant en communication avec l'intérieur du tube vertical (19) au dessus du moyen de tourbillonnement (25) et l'extrémité inférieure comportant une ouverture de sortie au dessous du plateau horizontal (9,10).

6. Procédé de soutirage de $H_2S$ a partir d'un mélange gazeux aigre contenant $H_2S$, qui consiste a introduire le mélange gazeux (2) dans un récipient (1) au dessous d'un plateau horizontal (9) comportant des moyens de contact (13, 14), ce plateau horizontal (9) étant monté dans le récipient (1) ; à introduire l'absorbant de liquide (4) dans le récipient (1) au dessus du plateau horizontal (9); a faire passer l'absorbant de liquide a partir d'une zone surmontant le plateau horizontal (9) vers l'intérieur du tube vertical (19) ouvert aux deux extrémités et faisant partie des moyens de contact (13, 14) au dessous de la matière de contact (22) disposée dans le tube vertical (19) ; à faire passer l'absorbant et le mélange gazeux de bas en haut à travers la matière de contact (22) ; à faire passer l'absorbant et le mélange gazeux à travers le dispositif de tourbillonnement (25) dans le tube vertical (19) de façon à séparer le gaz purifié et l'absorbant chargé ; à faire passer l'absorbant chargé depuis la partie supérieure du tube vertical (19) jusqu'à une zone au dessous du plateau horizontal (9) ; a éliminer le gaz purifié (5) du récipient (1) au dessus du plateau horizontal (9) et à soutirer l'absorbant chargé (7) du récipient (1) au dessous du plateau horizontal (9).

**Patentansprüche**

1. Vorrichtung für Gas-Flüssigkeitskontakt, umfassend ein Gefäß (1) mit einer Fluideinlaßeinrichtung (2, 4), einer Fluidauslaßeinrichtung (5, 7) und wenigstens einem horizontalen Trog (9, 10), der in dem Gefäß (1) angeordnet ist, dadurch **gekennzeichnet,** daß jeder horizontale Trog (9, 10) mit einer Kontaktiereinrichtung (13) versehen ist, die ein offenendiges vertikales Rohr (19), in welchem Kontaktiermaterial (22) angeordnet ist und in welchem Drall- bzw. Wirbelerteilungsmittel (25) oberhalb des Kontaktiermaterials (22) angeordnet sind, eine erste Leitungseinrichtung (26), die Fluidverbindung zwischen dem Raum oberhalb des horizontalen Troges (9, 10) und dem Inneren des vertikalen Rohres (19) unter dem Kontaktiermaterial (22) ermöglicht, und eine zweite Leitungseinrichtung (27) aufweist, die Fluidverbindung zwischen dem Inneren des vertikalen Rohres (19) oberhalb der Drall- bzw. Wirbelerteilungsmittel (25) und dem Raum unter dem horizontalen Trog (9, 10) ermöglicht.

2. Vorrichtung nach Anspruch 1, wobei jeder horizontale Trog (9, 10) eine Mehrzahl von Kontaktiereinrichtungen aufweist, die über den horizontalen Trog (9, 10) verteilt sind.

3. Vorrichtung nach Anspruch 1 oder 2, wobei das Gefäß (1) zwei oder mehr axial beabstandete horizontale Tröge (9, 10) aufweist.

4. Vorrichtung nach irgendeinem der Ansprüche 1 bis 3, wobei die erste Leitungseinrichtung wenigstens ein offenendiges Rohr (26) aufweist.

5. Vorrichtung nach irgendeinem der Ansprüche 1 bis 4, wobei die zweite Leitungseinrichtung (27) einen Ringraum zwischen der Außenseite der Wand des offenendigen vertikalen Rohres (19) und der Innenseite der Wand eines Rohres (30) umfaßt, welches außen rund um das vertikale Rohr (19) angeordnet ist, wobei das obere Ende des Ringraumes mit dem Inneren des vertikalen Rohres (19) unterhalb der Drall- bzw. Wirbelerteilungsmittel (25) in Verbindung steht und das untere Ende eine Auslaßöffnung unter dem horizontalen Trog (9, 10) hat.

6. Verfahren zum Entfernen von $H_2S$ aus einem sauren, $H_2S$ enthaltenden gasartigen Gemisch, umfassend das Einführen des gasartigen Gemisches (2) in ein Gefäß (1) unter einem horizontalen Trog (9), der mit einer Kontaktiereinrichtung (13, 14) versehen und in dem Gefäß (1) angeordnet ist, das Einführen eines flüssigen Absorptionsmittels (4) in das Gefäß (1) oberhalb des horizontalen Troges (9), das Führen von flüssigem Absorptionsmittel von oberhalb des horizontalen Troges (9) in das Innere eines offenendigen vertikalen Rohres (19), welches zu der Kontaktiereinrichtung (13, 14) gehört, und zwar unterhalb von Kontaktiermaterial (22), welches in dem vertikalen Rohr (19) angeordnet ist, das Führen von Absorptionsmittel und gasartigem Gemisch aufwärts durch das Kontaktiermaterial (22) hindurch, das Führen von Absorptionsmittel und gasartigem Gemisch über Drall- bzw. Wirbelerteilungsmittel (25), die in dem vertikalen Rohr (19) angeordnet sind derart, daß gereinigtes Gas und beladenes Absorptionsmittel getrennt werden, das Führen von beladenem Absorptionsmittel aus dem oberen Teil des vertikalen Rohres (19) zu einem Bereich unterhalb des horizontalen Troges (9), das Entfernen von gereinigtem Gas (5) aus dem Gefäß (1) oberhalb des horizontalen Troges (9), und das Entfernen von beladenem Absorptionsmittel (7) aus dem Gefäß (1) unterhalb des horizontalen Troges (9).

FIG.1

FIG.2